# EUROPÄISCHE PATENTSCHRIFT

(11) **EP 1 242 733 B1**
(45) Veröffentlichungstag und Bekanntmachung des Hinweises auf die Patenterteilung: **07.02.2007**
(21) Anmeldenummer: 00993430.8
(22) Anmeldetag: 28.11.2000
(51) Int. Cl.: F02D 11/10, F02D 41/14, B60W 10/04

(54) **VERFAHREN UND VORRICHTUNG ZUR STEUERUNG DER ANTRIEBSEINHEIT EINES FAHRZEUGS**
METHOD AND DEVICE FOR CONTROLLING THE DRIVE UNIT OF A VEHICLE
PROCEDE ET DISPOSITIF POUR LA COMMANDE DE L'UNITE D'ENTRAINEMENT D'UN VEHICULE

(30) Priorität: 18.12.1999 DE 19961291; 04.04.2000 DE 10016649
(43) Veröffentlichungstag der Anmeldung: 25.09.2002
(73) Patentinhaber: ROBERT BOSCH GMBH, 70442 Stuttgart (DE)
(72) Erfinder: GERHARDT, Juergen, 71739 Oberriexingen (DE); MENCHER, Bernhard, 71701 Schwieberdingen (DE); KIND, Werner, 71706 Markgroeningen (DE); HESS, Werner, 70499 Stuttgart (DE)
(86) Internationale Anmeldenummer: PCT/DE2000/004231
(87) Internationale Veröffentlichungsnummer: WO 2001/044642

(56) Entgegenhaltungen:
- DE-A- 19 611 502
- DE-A- 19 739 567
- GB-A- 2 321 535
- US-A- 5 491 635

## Beschreibung

### Stand der Technik

Die Erfindung betrifft ein Verfahren und eine Vorrichtung zur Steuerung der Antriebseinheit eines Fahrzeugs.

Bei modernen Fahrzeugsteuerungen wirken auf die vorhandenen Stellglieder (z. B. Antriebseinheit, Getriebe, etc.) eine Vielzahl von zum Teil gegensätzlichen Vorgaben. So soll beispielsweise die Antriebseinheit eines Fahrzeugs auf der Basis eines vom Fahrer vorgegebenen Fahrwunsches, Sollwerten von externen und/oder internen Regel- und Steuerfunktionen, wie beispielsweise einer Antriebschlupfregelung, einer Motorschleppmomentenregelung, einer Getriebesteuerung, einer Drehzahl- und/oder Geschwindigkeitsbegrenzung und/oder einer Leerlaufdrehzahlregelung gesteuert werden. Diese Sollvorgaben zeigen zum Teil entgegengesetzte Auswirkungen, so dass, da die Antriebseinheit lediglich eine dieser Sollwertvorgaben einstellen kann, diese Sollwertvorgaben koordiniert werden müssen, das heißt eine zu realisierende Sollwertvorgabe auszuwählen ist.

Aus der DE 196 11 502 A1 ist ein Verfahren und eine Vorrichtung zur Steuerung der Fahrgeschwindigkeit eines Fahrzeugs im Rahmen einer Fahrgeschwindigkeitsregelung bekannt, wobei die Fahrgeschwindigkeitsregelung abhängig vom Fahrerverhalten ist. Das Fahrerverhalten wird aus einer in einer automatischen Getriebesteuerung ermittelten Fahrertyp-Kennzahl bestimmt.

Im Zusammenhang mit der Steuerung einer Antriebseinheit ist aus der DE 197 39 567 A1 eine derartige Koordination verschiedener Sollmomentenwerte bekannt. Dort wird durch Maximal- und/oder Minimalwertauswahl aus den Momentensollwerten ein Sollwert ausgewählt, der im aktuellen Betriebszustand durch Bestimmung der Größen der einzelnen Steuerparameter der Antriebseinheit, beispielsweise bei einer Brennkraftmaschine der Füllung, des Zündwinkels und/oder der einzuspritzenden Kraftstoffmenge, realisiert wird. Neben der Größen der Sollvorgaben können mit den Sollvorgaben verschiedene Eigenschaften, beispielsweise bezüglich der erforderlichen Dynamik der Einstellung, der Priorität, etc., verbunden sein, die ebenfalls gegensätzlicher Natur sein können und die in der bekannten Koordination der Sollvorgaben nicht mit berücksichtigt sind.

Aus der DE 197 09 317 A1 ist eine Vorgehensweise bekannt, bei welcher für ein Gesamtfahrzeug Koordinatoren vorgegeben sind, welche den Resourcenbedarf und die Ressourcenverteilung der Steuersysteme des Gesamtfahrzeugs unter anderem auf der Basis von mitgeteilten Randbedingungen, beispielsweise einer gewünschten Dynamik, vornehmen. Konkrete Hinweise auf die Vorgehensweise zur Steuerung einer Antriebseinheit mit Blick auf die oben erwähnten Eigenschaften der Sollwertvorgaben werden nicht vermittelt.

Es ist Aufgabe der Erfindung, Maßnahmen anzugeben, mit deren Hilfe neben den Sollwertvorgabegrößen auch die damit verbundenen Eigenschaftsgrößen koordiniert und/oder bei der Umsetzung in Steuergrößen zur Steuerung der Antriebseinheit berücksichtigt werden. Dies wird durch die Merkmale der unabhängigen Patentansprüche erreicht.

### Vorteile der Erfindung

Durch die voneinander unabhängige Koordination der Eigenschaftsgrößen und der Sollwertvorgabengrößen wird eine optimale Koordination gegensätzlicher Anforderungen an die Steuerung der Antriebseinheit realisiert und jeweils eine geeignete Sollgröße mit einer ausgewählten Eigenschaftsgröße bzw. ausgewählten Eigenschaftsgrößen in die entsprechenden Steuerparameter der Antriebseinheit umgesetzt. Ergebnis ist eine zufriedenstellende Realisierung der Sollwertvorgaben im Rahmen der mit den Sollwertvorgaben übermittelten Randbedingungen.

Besonders vorteilhaft ist, daß auf diese Weise eine Koordination der genannten Größen stattfindet, ohne daß die konkrete Wahl der Steuerparameter der Antriebseinheit (bei einer Brennkraftmaschine z.B. Füllung, Zündwinkel, Einspritzmenge, Einspritzzeitpunkt, etc.) bereits zum Zeitpunkt der Koordination der Sollwertvorgaben- und ihrer Eigenschaftsgrößen vorzunehmen ist.

In besonders vorteilhafter Weise wird die dargestellte Vorgehensweise zur Koordination und/oder Umsetzung von Sollwertvorgabe- und Eigenschaftsgrößen bei Benzindirekteinspritzungssystemen, aber auch bei herkömmlichen Saugrohreinspritzungssystemen, Dieseleinspritzsystemen oder bei alternativen Antriebskonzepten (Elektroantriebe, Brennstoffzellenantriebe, etc.) eingesetzt.

In besonders vorteilhafter Weise werden bei einem drehmomentenorienten Steuersystem für die Antriebseinheit alle externen und internen Momentenanforderungen einschließlich ihrer übermittelten Randbedingungen koordiniert und priorisiert. Besonders vorteilhaft ist dabei die Koordination unterschiedlicher Dynamikanforderungen mit Hilfe der vorgestellten Vorgehensweise, wobei Grenzen der Dynamikumsetzung vom Koordinator berücksichtigt werden. Diese Koordinatoren können auch über mehrere Steuergeräte verteilt sein, unabhängig von der Partitionierung.

In vorteilhafter Weise wird der vom Koordinator ermittelte resultierende Sollwert samt resultierender Eigenschaftgröße(n) in Abhängigkeit vom Betriebspunkt und Betriebszustand der Antriebseinheit durch einen oder mehrere Sollwerte für die Stellpfade (Steuergrößen) der Antriebseinheit umgesetzt. Bei der Umsetzung und Auswahl der zur Verfügung stehenden Stellpfade werden die übermittelten Eigenschaftsgröße(n) sowie der aktuelle Betriebszustand der Antriebseinheit berücksichtigt, so daß eine optimale Umsetzung der resultierende Sollwertvorgabe im Rahmen der resultierenden Eigenschaft(en) und des aktuellen Betriebszustandes des Motors erfolgt.

Weitere Vorteile ergeben sich aus der nachfolgenden Beschreibung von Ausführungsbeispielen bzw. aus den abhängigen Patentansprüchen.

### Zeichnung

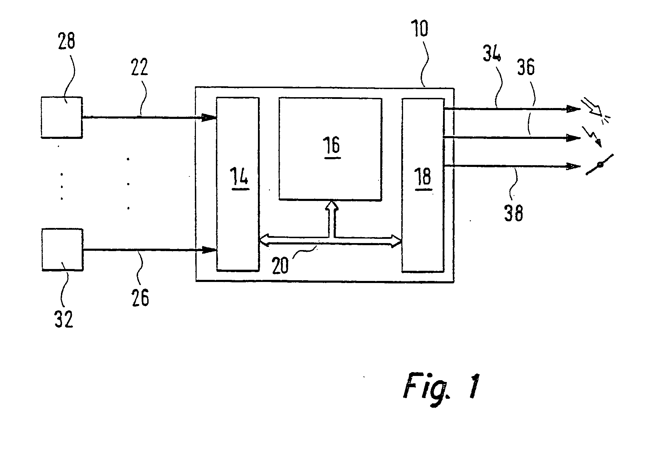

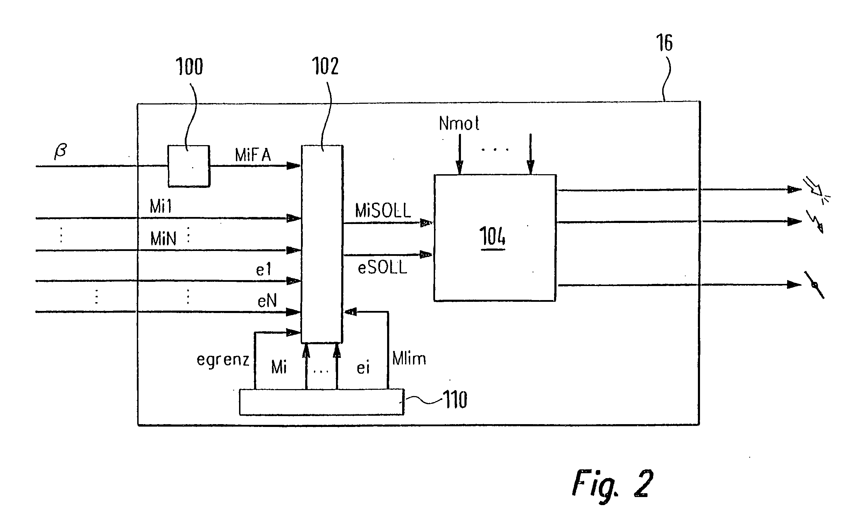

Die Erfindung wird nachstehend anhand der in der Zeichnung dargestellten Ausführungsformen näher erläutert. Dabei zeigt Figur 1 ein Übersichtsschaltbild einer Steuereinrichtung zur Steuerung einer Antriebseinheit in einem bevorzugten Ausführungsbeispiel, während in den Figuren 2 bis 4 Ablaufdiagramme dargestellt sind, welche die Koordination der vorhandenen Sollvorgaben samt Eigenschaften bzw. die Umsetzung der resultierenden Sollvorgabe und Eigenschaft(en) durch Auswahl der zur Verfügung stehenden Stellpfade darstellen.

### Beschreibung von Ausführungsbeispielen

Figur 1 zeigt ein Blockschaltbild einer Steuereinrichtung zur Steuerung einer Antriebseinheit, insbesondere einer Brennkraftmaschine, vorzugsweise mit Benzindirekteinspritzung. Es ist eine Steuereinheit 10 vorgesehen, welches als Komponenten eine Eingangsschaltung 14, wenigstens eine Rechnereinheit 16 und eine Ausgangsschaltung 18 aufweist. Ein Kommunikationssystem 20 verbindet diese Komponenten zum gegenseitigen Datenaustausch. Der Eingangsschaltung 14 der Steuereinheit 10 werden Eingangsleitungen 22 bis 26 zugeführt, welche in einem bevorzugten Ausführungsbeispiel als Bussystem ausgeführt sind und über die der Steuereinheit 10 Signale zugeführt werden, welche zur Steuerung der Antriebseinheit auszuwertende Betriebsgrößen repräsentieren. Diese Signale werden von Meßeinrichtungen 28 bis 32 erfaßt. Derartige Betriebsgrößen sind Fahrpedalstellung, Motordrehzahl, Motorlast, Abgaszusammensetzung, Motortemperatur, etc. Über die Ausgangsschaltung 18 steuert die Steuereinheit 10 die Leistung der Antriebseinheit. Dies ist in Figur 1 anhand der Ausgangsleitungen 34, 36 und 38 symbolisiert, über welche wenigstens die einzuspritzende Kraftstoffmasse, den Zündwinkel der Brennkraftmaschine sowie wenigstens eine elektrisch betätigbare Drosselklappe zur Einstellung der Luftzufuhr zur Brennkraftmaschine betätigt werden. Neben den geschilderten Eingangsgrößen sind weitere Steuersysteme des Fahrzeugs vorgesehen, die der Eingangsschaltung 14 Vorgabegrößen, beispielsweise Drehmomentensollwert, übermitteln. Derartige Steuersysteme sind beispielsweise Antriebsschlupfregelungen, Fahrdynamikregelungen, Getriebesteuerungen, Motorschleppmomentenregelungen, etc. Über die dargestellten Stellpfade werden die Luftzufuhr zur Brennkraftmaschine, der Zündwinkel der einzelnen Zylinder, die einzuspritzende Kraftstoffmasse, der Einspritzzeitpunkt, das Luft-/Kraftstoffverhältnis, etc. eingestellt. Neben den dargestellten Sollwertvorgaben, den externen Sollwertvorgaben, zu denen auch eine Sollwertvorgabe durch den Fahrer in Form eines Fahrwunsches gehört, sind interne Vorgabengrößen zur Steuerung der Antriebseinheit vorhanden, beispielsweise eine Drehmomentenänderung einer Leerlaufregelung, eine Drehzahlbegrenzung, die eine entsprechende Sollvorgabengröße ausgibt, eine Geschwindigkeits- und/oder Drehmomentenänderungsbegrenzung, Begrenzungen aus Bauteileschutz oder eine separate Sollvorgabegröße im Start.

Mit den einzelnen Sollwertvorgabengrößen sind Randbedingungen oder Eigenschaften verbunden, welche die Art und Weise der Umsetzung der Sollwertvorgabegröße darstellen. Dabei können je nach Anwendungsbeispiel mit einer Sollwertvorgabengröße eine oder mehrere Eigenschaften verbunden sein, so daß unter dem Begriff Eigenschaften in einem vorteilhaften Ausführungsbeispiel ein Eigenschaftsvektor zu verstehen ist, in dem die verschiedenen Eigenschaftsgrößen eingetragen sind. Eigenschaften von Sollwertvorgabegrößen sind z.B. die erforderliche Dynamik bei der Einstellung der Sollwertvorgabengröße, die Priorität der Sollwertvorgabengröße, die Größe der einzustellenden Momentenreserve, und/oder der Komfort der Verstellung (z.B Änderungsbegrenzung). Diese Eigenschaften sind in einem bevorzugten Ausführungsbeispiel vorhanden. In anderen Ausführungsbeispielen sind mehr oder weniger, auch nur eine Eigenschaft vorgesehen.

Ein entsprechender die vorstehend dargestellten Eigenschaften umfassender Eigenschaftsvektor wird mit jeder Sollwertvorgabengröße von den externen Steuer- bzw. Regeleinrichtungen oder den internen Funktionen übermittelt.

Figur 2 zeigt ein Ablaufdiagramm, welches ein in der Rechnereinheit 16 der Steuereinheit ablaufendes Programm skizziert. Es beschreibt die Koordination und Umsetzung der Sollwertvorgaben sowie deren Eigenschaften. Der Rechnereinheit 16 wird eine die Fahrpedalstellung β repräsentierende Größe zugeführt. Diese setzt sie, ggf. unter Berücksichtigung weiterer Betriebsgrößen wie der Motordrehzahl, in einem Berechnungsschritt 100 in ein Fahrerwunschmoment MiFA um, welches dem Koordinator 102 zugeführt wird. Ferner werden der Rechnereinheit 16 externe Momentensollwerte Mil bis MiN übermittelt, die ebenfalls dem Koordinator 102 zugeführt werden. Mit jedem Momentensollwert werden die ausgewählten Eigenschaftsgrößen (bzw. Eigenschaftsvektoren, die aus einzelnen Eigenschaftsgrößen bestehen) el bis eN übermittelt und dem Koordinator 102 zugeführt. Darüber hinaus sind interne Funktionen 110 vorgesehen, welche entweder ebenfalls Momentensollwerte mit den entsprechenden Eigenschaftsgrößen dem Koordinator 102 zuführen oder welche Grenzwerte Mlim für die Momentensollwerte bzw. egrenz für die Eigenschaftsgrößen vorgeben, die ebenfalls dem Koordinator 102 zugeführt werden und bei der Koordination der Sollwerte und Eigenschaftswerte berücksichtigt werden. Ausgang des Koordinators 102 ist der resultierende Sollmomentenwert MiSOLL, der letztendlich zur Einstellung gelangt, sowie die aus den zugeführten Eigenschaftsgrößen unter Berücksichtigung der Grenzwerte ausgewählte(n) resultierende(n) Eigenschaftsgröße(n) eSOLL, in deren Rahmen der Sollwert realisiert wird. Diese Größen werden einem Umsetzer 104 zugeführt, dem ferner weitere Betriebsgrößen wie Motordrehzahl, etc. zugeführt werden. Der Umsetzer setzt den Sollmomentenwert MiSOLL unter Berücksichtigung der zugeführten Betriebsgrößen und der(den) resultierenden Eigenschaftsgröße(n) in Stellgrößen um. Mit diesen Stellgrößen werden Kraftstoff zumessung, Zündwinkel, Luftzufuhr, etc. beeinflußt, derart, daß sich das vorgegebenen Sollmoment im Rahmen der resultierenden Eigenschaft(en) einstellt.

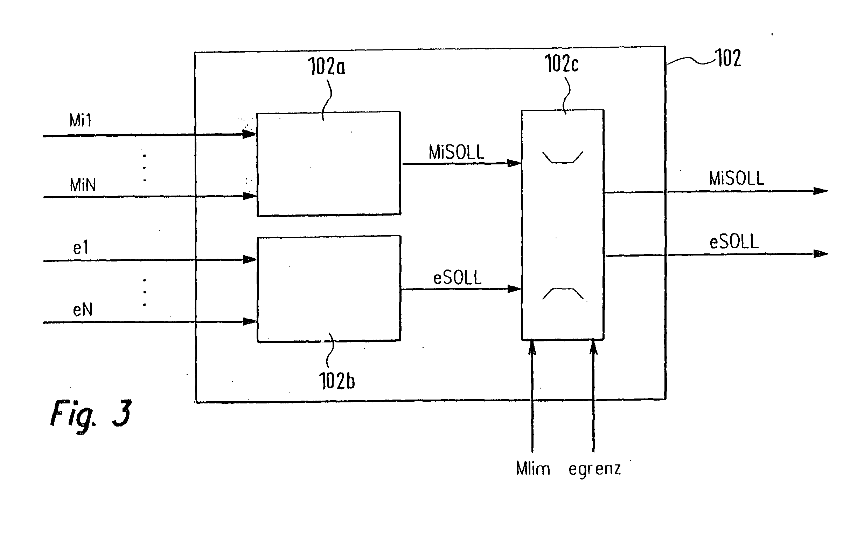

Figur 3 zeigt ein Ablaufdiagramm, welches ein bevorzugtes Ausführungsbeispiel des Koordinators 102 darstellt. Wie oben dargestellt, werden dem Koordinator Sollmomentenwerte Mil bis MiN zugeführt, unter die auch die Sollmomente der internen Funktionen fallen. Diesen Sollmomenten zugeordnet sind Eigenschaftsgrößen el bis eN, ebenfalls auch für die internen Sollwertvorgaben. Die Sollmomentenwerte werden dem Momentenkoordinator 102a zugeführt, der wie im eingangs genannten Stand der Technik arbeitet. Die Eigenschaftsgrößen (-vektoren) el bis eN werden dem Eigenschaftenkoordinator 102b zugeführt und dort koordiniert. Die konkrete Ausgestaltung des Koordinators 102b hängt von den verwendeten Eigenschaften ab. Die Eigenschaft "Priorität" wird durch den Koordinator dadurch ausgewählt, daß die jeweils höchste Priorität an den Umsetzer weitergegeben wird. Die Eigenschaft "Dynamik" wird ausgewählt, in dem die jeweils höchste Dynamikanforderung als Eigenschaft an dem Umsetzer ausgegeben wird. Entsprechendes gilt für die Eigenschaft Momentenreserve. Auch hier wird die größte einzustellende Momentenreserve weitergegeben. Bezüglich der Eigenschaft Komfort ergibt sich die Auswahl beispielsweise dadurch, daß je nach eingestelltem Fahrertyp (sportlicher Fahrer, komfortabler Fahrer, etc.) die Auswahl bezüglich der Eigenschaft Komfort eher eine komfortablere oder eine sportlichere Realisierung vorgenommen wird. Die auf diese Weise ausgewählten Sollwertvorgaben und Eigenschaften werden von den Koordinatoren 102a und 102b an den Begrenzer 102c abgegeben. Dort wird die Sollwertvorgabe auf die vorgegebenen Momentengrenzwerte Milim, der aus Bauteileschutzgründen, Abgasgründen, etc. gebildet ist, begrenzt. Entsprechend wird die übermittelten Eigenschaftswerte bzw. Eigenschaftswert auf den Grenzwert egrenz begrenzt. Beispielsweise stellt dieser Grenzwert die im aktuellen Betriebszustand die maximal mögliche Dynamik der Verstellung bzw. die maximal mögliche Größe der Momentenreserve dar. Die Eigenschaftengrenzwerten sind entweder fest vorgegeben oder werden im Rahmen von Kennfeldern, Berechnungen, etc. auf der Basis des Betriebszustandes, von Betriebsgrößen, etc. berechnet. Vom Begrenzer 102c werden dann die ggf. begrenzten resultierenden Werte MiSOLL und eSOLL, die dem Umsetzer zur Einstellung übermittelt werden, ausgesandt.

Momentensollwerte und Eigenschaftswerte werden somit getrennt und unabhängig voneinander koordiniert. Daher kann, wenn ein Momentensollwert durch den Koordinator 102 ausgewählt wird, seine Eingangseigenschaften verändert werden, da durch den Koordinator 102b eine andere Eigenschaft als wesentlich ausgewählt wird. Die Eigenschaftswerte sind demnach unabhängig von den Momentensollwerten veränderbar.

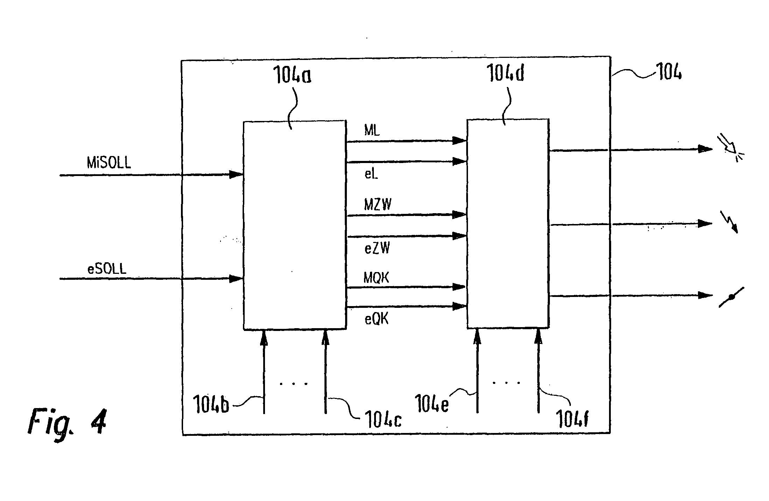

Figur 4 zeigt ein Ablaufdiagramm einer bevorzugten Realisierung des Umsetzers 104. Diesem werden die gemäß Figur 3 ermittelten resultierenden Werte MiSOLL und eSOLL zugeführt. Zunächst wird in 104a , ggf. unter Berücksichtigung von weiteren Betriebsgrößen, die über die Leitungen 104b bis 104c zugeleitet werden, die Stellpfade ausgewählt. Dies erfolgt beispielsweise nach Maßgabe der für jeden Stellpfad bei Einstellung des Sollwertes bzw. eines Teils des Sollwertes zu realisierenden Eigenschaft. Beispielsweise wird bezüglich der Eigenschaft Dynamik abhängig vom aktuellen Betriebszustand, der im wesentlichen von der Drehzahl bestimmt wird, die für die Einstellung des Sollwertes minimal erforderliche Zeit in einer Tabelle angegeben, so daß unter Berücksichtigung der Dynamikanforderung der geeignete Stellpfad ausgewählt wird. Die Stellgrößen werden also anhand der übermittelten Sollwerte und Eigenschaften generiert und sind von Betriebsart (bei Benzindirekteinspritzmotoren), Drehzahl- und/oder weiteren Eingangsgrößen abhängig. Liegt beispielsweise ein Homogenbetrieb vor, so wird die Momentenreserve als Zündwinkelverstellung eingestellt, während sie bei der Betriebsart Schichtbetrieb nicht ausgeführt wird. Die Information über die aktuelle Betriebsart liegt dem Umsetzer 104 vor. Ein weiteres Beispiel ist die Antiruckelfunktion, die die Umsetzung eines Momentenwunsches in einer bestimmten Zeit, beispielsweise 50 ms, anfordert. Dies ist bei niedriger Drehzahl nur über eine Zündwinkelverstellung möglich bzw. im Schichtbetrieb über eine Änderung der Kraftstoffmasse, da nur diese Stellpfade die erforderliche Dynamik bereitstellen. Bei hohen Drehzahlen ist die angeforderte Änderung auch über die Kraftstoffmenge möglich, auch im Homogenbetrieb, weil die Totwinkel im Kraftstoffpfad jetzt zu Totzeiten kleiner als die erforderliche Dynamik führen. Der Umsetzer ermittelt also für jeden einzelnen Stellpfad das einzustellende Moment. Dabei sind in Figur 4 die Stellpfade Luft (ML), Zündwinkel (MZW) und Kraftstoff (MQK) dargestellt. Mit jeder Stellgröße wird auch die die Realisierung der Stellgröße charakterisierende Eigenschaft eL, eZW, eQK (z.B. die erforderliche Dynamik der Verstellung der jeweiligen Stellgröße, etc.) übermittelt. In einer bevorzugten Realisierung wird als Eigenschaftsgröße die erforderliche Dynamik der Verstellung des Moments übermittelt. Zur Auswahl des oder der Stellpfade sind in diesem Beispiel Tabellen vorgesehen, in denen abhängig von der Drehzahl die minimalen Verstellzeiten der einzelnen Stellpfade für eine bestimmte Drehmomentenänderung eingetragen sind. Für eine Drehmomentenänderung von 50Nm ergibt sich beispielsweise bei einer Drehzahl von 2000 Umdr./min eine Verstellzeit von 67msec für den Luftpfad, 33msec für den Kraftstoff- und 14msec für den Zündwinkelpfad, während bei 4000 Umdr./min die entsprechenden Werte 27msec, 13msec und 6msec sind. Daher wird bei einer Eigenschaftsgröße von 30msec bei einer Drezahl von 2000 Umdr./min der Zündwinkelpfad, bei einer Drehzahl von 4000 umdr./min der Luftpfad ausgewählt. Kann die Drehmomentenänderung nicht allein über einen Pfad erfolgen, wird eine Kombination der Stellpfade ausgewählt (z.B. einen Teil der Drehmomentenänderung über Zündwinkel, der Rest über Kraftstoff), wobei entsprechende Eigenschaftsgrößen für den jeweiligen Stellpfad übermittelt werden. Nach der Drehmomentenänderung wird in einem Ausführungsbeispiel der Zündwinkel auf seinen Ausgangspunkt zurückgesetzt und die Luftzufuhr entsprechend angepaßt. Die anderen Eigenschaften werden entsprechend realisiert. Ein weiteres Beispiel ergibt sich, wenn bei λ = 1 Homogenbetrieb durch Füllungserhöhung und ZW-Spätverstellung ein Vorhalt eingestellt wird. Im Schichtbetrieb führt die Anforderung der Reserve entweder zu einer Betriebsartenschaltung (Reserve kann nicht eingstellt werden) oder es gibt durch die λ-Grenzen bereits den geforderten Vorhalt im Schichtbetrieb.

Die Sollstellgrößen werden dann im eigentlichen Umsetzer 104d entsprechend der getroffenen Auswahl ebenfalls unter Berücksichtigung von Betriebsgrößen, die über die Leitungen 104e bis 104f zugeführt werden, unter Berücksichtigung der übermittelten Eigenschaften in Stellsignale zur Einstellung der Kraftstoffzumessung, des Zündwinkels und/oder der Luftzufuhr ausgegeben. Dabei wird der übermittelte Sollwert in aus dem Stand der Technik bekannter Weise in Stellgrößen umgesetzt, während die Art und Weise der Änderung der Stellgröße durch die Eigenschaften bestimmt ist. Die Wirkungsgrade der vorgesteuerten Pfade werden entsprechend dem Stand der Technik berücksichtigt.

Neben den genannten Stellgrößen stehen insbesondere bei Benzindirekteinspritzmotoren weitere Stellgrößen wie Einspritzzeit, Drallklappenstellung, Ventilstellungen, etc. zur Verfügung .

Die geschilderte Vorgehensweise ist nicht nur auf die Anwendung bei Benzinbrennkraftmaschinen eingeschränkt, sondern wird entsprechender Weise auch bei Dieselbrennkraftmaschinen und/oder alternativen Antriebsformen, wie beispielsweise Elektromotoren, etc., angewendet.

Ferner wird die geschilderte Vorgehensweise nicht nur in Verbindung mit der Vorgabe von Drehmomentensollwerten, sondern auch mit anderen Ausgangsgrößen der Antriebseinheit wie Leistung, Abtriebsdrehzahl, etc. eingesetzt.

## Patentansprüche

1. Verfahren zur Steuerung der Antriebseinheit eines Fahrzeugs, wobei einem ersten Koordinator (102a) mehrere Sollwertvorgaben für eine Drehmoment, eine Leistung oder eine Abtriebsdrehzahl der Antriebseinheit zugeführt werden und wobei vom ersten Koordinator (102a) aus den Sollwertvorgaben eine resultierende Sollwertvorgabe ermittelt und von einem Umsetzer (104) eingestellt wird, **dadurch gekennzeichnet, dass** den Sollwertvorgaben zugeordnete Eigenschaftsgrößen oder -vektoren, die eine Verstellzeit zur Umsetzung der zugeordneten Sollwertvorgabe, eine einzustellende Größe einer Momentenreserve und/oder einen Komfort der Verstellung für die Umsetzung der Zugeordneten Sollwertvorgabegröße darstellen, einem zweiten Koordinator (102b) zugeführt werden und dass vom zweiten Koordinator (102b) eine resultierende Eigenschaftsgröße oder ein resultierender Eigenschaftsvektor ermittelt wird und dass die resultierende Sollwertvorgabe nach Maßgabe der resultierenden Eignschaftsgröße bzw. des resultierenden Eigenschaftsvektors vom Umsetzer (104) eingestellt wird.

2. Verfahren nach Anspruch 1, **dadurch gekennzeichnet, dass** die Sollwertvorgaben Sollwerte für ein Drehmoment der Antriebseinheit sind.

3. Vorrichtung zur Steuerung der Antriebseinheit eines Fahrzeugs, mit einer Steuereinheit, die wenigstens ein Rechnerelement umfasst, welchem, Sollwertvorgaben für ein Drehmoment, eine Leistung oder eine Abtriebsdrehzahl der Antriebseinheit übermittelt werden, wobei die Rechnereinheit einen ersten Koordinator (102a) umfasst, der aus den Sollwertvorgaben eine resultierende Sollwertvorgabe ermittelt, und wobei die Steuereinheit einen Umsetzer (104) umfasst, der die resultierende Sollwertvorgabe einstellt, **dadurch gekennzeichnet, dass** die Rechnereinheit einen zweiten Koordinator (102b) umfasst, dem den Sollwertvorgaben zugeordnete Eigenschaftsgrößen oder -vektoren, die eine Verstellzeit zur Umsetzung der zugeordneten Sollwertvorgabe, eine einzustellende Größe einer Momentenreserve und/oder einen Komfort der Verstellung für die Umsetzung der zugeordneten Sollwertvorgabegröße darstellen, zugeführt sind, dass der zweite Koordinator (102b) eine resultierende Eigenschaftsgröße oder einen resultierenden Eigenschaftsvektor ermittelt und dass der Umsetzer (104) die resultierende Sollwertvorgabe nach Maßgabe der resultierenden Eigenschaftsgröße bzw. des resultierenden Eigenschaftsvektors einstellt.

## Claims

1. Method for controlling the drive unit of a vehicle, a plurality of predefined setpoint values for a torque, a power level or an output rotational speed of the drive unit being fed to a first co-ordinator, and a resulting predefined setpoint value being determined from the predefined setpoint values by the first co-ordinator (102a) and being set by a converter (104), **characterized in that** property variables or property vectors which are assigned to the predefined setpoint values and which represent an adjustment time for converting the assigned predefined setpoint value, a torque reserve variable which is to be set and/or a comfort level of the adjustment for the conversion of the assigned predefined setpoint value variable are fed to a second co-ordinator (102b), and **in that** a resulting property variable or a resulting property vector is determined by the second co-ordinator (102b), and **in that** the resulting predefined setpoint value is set by the converter (104) in accordance with the resulting property variable or the resulting property vector.

2. Method according to Claim 1, **characterized in that** the predefined setpoint values are setpoint values for a torque of the drive unit.

3. Device for controlling the drive unit of a vehicle, having a control unit which comprises at least one computer element to which predefined setpoint values for a torque, a power level or an output rotational speed of the drive unit are transmitted, the computer unit comprising a first co-ordinator (102a) which determines a resulting predefined setpoint value from the predefined setpoint values, and the control unit comprising a converter (104) which sets the resulting predefined setpoint value, **characterized in that** the computer unit comprises a second co-ordinator (102b) to which property variables or property vectors which are assigned to the predefined setpoint values and which represent an adjustment time for converting the assigned predefined setpoint value, a torque reserve variable which is to be set and/or a comfort level of the adjustment for the conversion of the assigned predefined setpoint value variable are fed, **in that** the second co-ordinator (102b) determines a resulting property variable or a resulting property vector, and **in that** the converter (104) sets the resulting predefined setpoint value in accordance with the resulting property variable or the resulting property vector.

## Revendications

1. Procédé de commande de l'unité d'entraînement d'un véhicule, plusieurs directives de valeur de consigne pour un couple de rotation, une puissance ou une vitesse d'un arbre de sortie de l'unité d'entraînement étant amenées à un premier coordinateur (102a) et une directive de valeur de consigne résultante étant déterminée par le premier coordinateur (102a) à partir des directives de valeur de consigne et étant réglée par un convertisseur (104),
**caractérisé en ce que**
des grandeurs ou des vecteurs de propriété associés aux directives de valeur de consigne et représentant un temps d'ajustage pour la conversion de la directive de valeur de consigne associée, une grandeur à régler d'une réserve de couple et/ou un confort de l'ajustage pour la conversion de la grandeur de directive de valeur de consigne associée sont amenés à un deuxième coordinateur (102b), une grandeur de propriété résultante ou un vecteur de propriété résultant est déterminé(e) par le deuxième coordinateur (102b), et la directive de valeur de consigne résultante est réglée par le convertisseur (104) conformément à la grandeur de propriété résultante et/ou au vecteur de propriété résultant.

2. Procédé selon la revendication 1,
**caractérisé en ce que**
les directives de valeur de consigne sont des valeurs de consigne pour un couple de rotation de l'unité d'entraînement.

3. Dispositif de commande de l'unité d'entraînement d'un véhicule équipé d'une unité de commande qui comprend au moins un élément d'ordinateur auquel sont transmises des directives de valeur de consigne pour un couple de rotation, une puissance ou une vitesse d'un arbre de sortie de l'unité d'entraînement, l'unité d'ordinateur comprenant un premier coordinateur (102a) qui détermine une directive de valeur de consigne résultante à partir des directives de valeur de consigne et l'unité de commande comprenant un convertisseur (104) qui règle les directives de valeur de consigne résultantes
**caractérisé en ce que**
l'unité d'ordinateur comprend un deuxième coordinateur (102b) auquel sont amenés des grandeurs ou des vecteurs de propriété associés aux directives de valeur de consigne qui représentent un temps d'ajustage pour la conversion de la directive de valeur de consigne associée, une grandeur à régler d'une réserve de couple et/ou un confort de l'ajustage pour la conversion de la grandeur de directive de valeur de consigne associée, le deuxième coordinateur (102b) détermine une grandeur de propriété résultante ou un vecteur de propriété résultant, et le convertisseur (104) règle la directive de valeur de consigne résultante conformément à la grandeur de propriété résultante et/ou au vecteur de propriété résultant.
